# EUROPEAN PATENT SPECIFICATION

(11) **EP 2 361 824 B1**
(45) Date of publication and mention of the grant of the patent: **25.03.2015**
(21) Application number: 10197029.1
(22) Date of filing: 27.12.2010
(51) Int. Cl.: B62K 19/46, B62J 17/02, B62J 17/06

(54) **Motorcycle with lid structure of a front storage box**
Motorrad mit einer Deckelstruktur eines vorderen Aufbewahrungskastens
Motocyclette avec structure de couvercle pour boîte de stockage avant

(30) Priority: 24.02.2010 TW 099105279
(43) Date of publication of application: 31.08.2011
(73) Proprietor: Kwang Yang Motor Co., Ltd., San-Min Dist., Kaohsiung City (TW)
(72) Inventor: Lee, Hsin-Hsiang, Cambridge, CB1 1AH (GB)
(74) Representative: Horak, Michael

(56) References cited:
- JP-A- 11 198 878
- JP-A- 11 208 551
- JP-A- 2005 088 797
- JP-A- 2006 096 171
- JP-U- 61 017 386
- JP-U- 61 078 085
- US-A1- 2007 247 280

## Description

### (a) Technical Field of the Invention

The present invention generally relates to a motorcycle having a front storage box lid of, and more particularly to a structure that improves structural strength of a rotation arm of the front storage box lid and facilitates easy assembling of upper and lower rear shade boards.

### (b) Description of the Prior Art

A two-wheeled scooter type motorcycle is often provided with an open or closed front storage box at a location below a steering handgrip of the motorcycle to receive and store small articles of a rider. An open front storage box allows a rider to temporarily place articles therein, while a closed front storage box allows a rider to store articles, such as gloves and spectacles, therein for a long period of time.

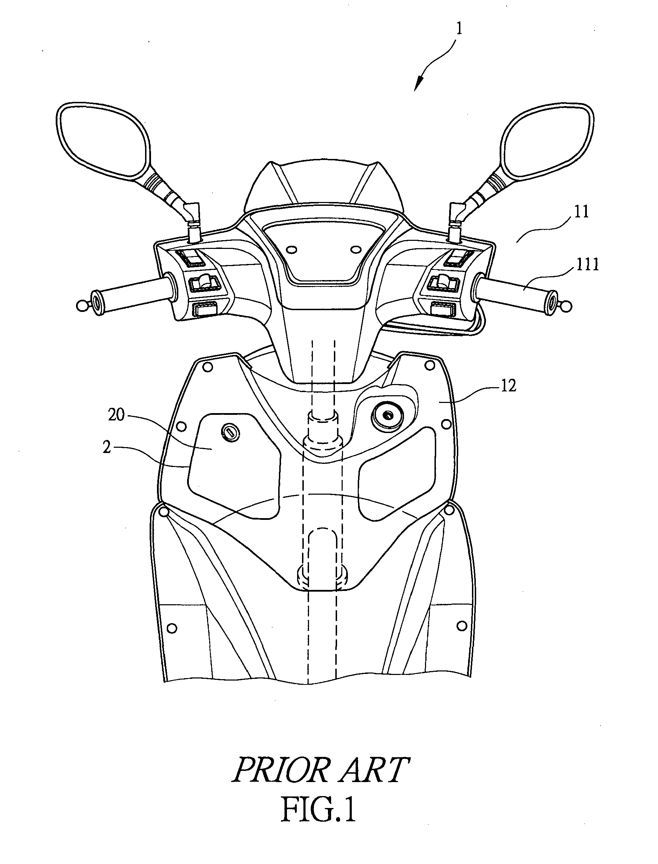

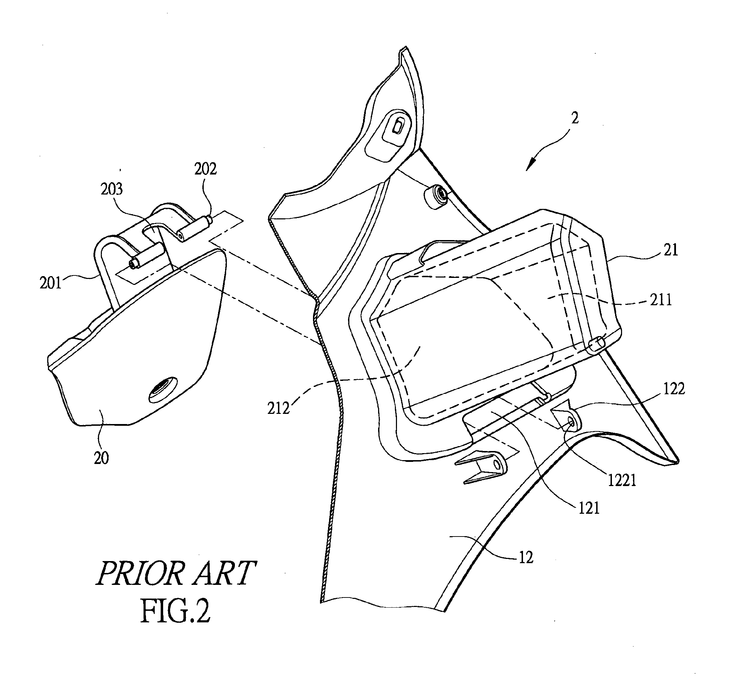

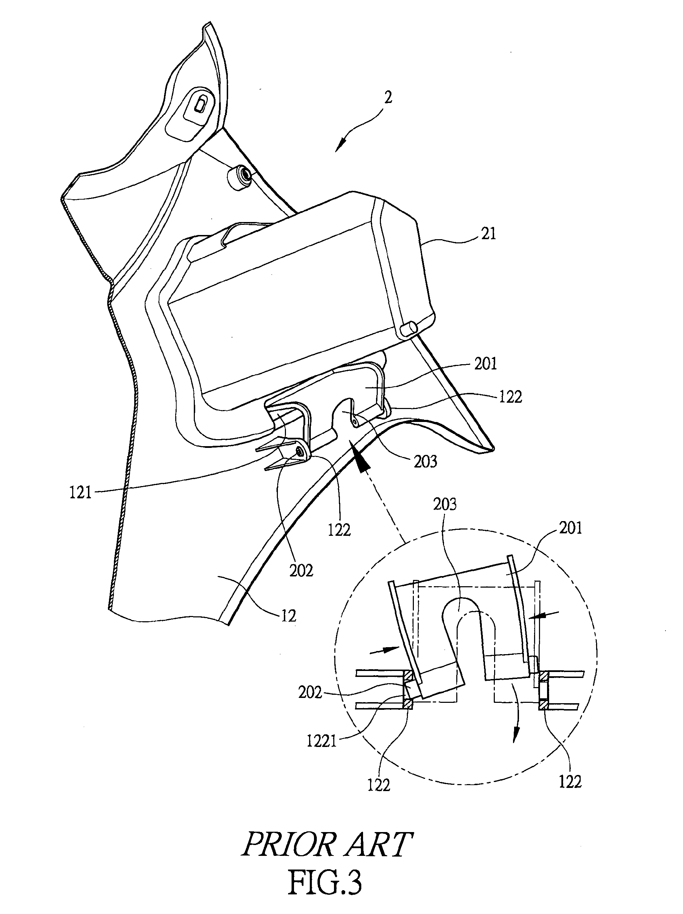

Referring to FIG 1, a motorcycle 1 comprises a steering mechanism 11, which comprises a steering handgrip 111. Arranged below the steering mechanism 11 is a rear shade board 12, which forms front storage box 2 that is closable by a front storage box lid 20. Also referring to FIGS. 2 and 3, the conventional front storage box 2 is integrally formed on the rear shade board 12 and comprises a main body 21, which defines a storage chamber 211 for receiving and storing articles therein. The main body 21 comprises an opening 212 formed in the surface of the rear shade board 12 and the opening 212 is closable by a front storage box lid 20 in order to close the front storage box 2. Arranged in the rear shade board 12 below the opening 212 is an open slot 121, which has opposite end sides that are provided with pivot seats 122 below the opening slot 121. The pivot seats 122 form aligned pivot holes 1221. The front storage box lid 20 comprises a rotation arm 201 extending therefrom The rotation arm 201 has an end that forms pivot sections 202 extending in opposite directions. The pivot sections 202 respectively correspond to the pivot holes 1221 of the pivot seats 122. A U-shaped notch 203 is formed between the pivot sections 202 to provide the end of the rotation arm 201 resiliency, whereby to mount the front storage box lid 20, the pivot sections 202 of the rotation arm 201 are put through the open slot 121, and the portions on the opposite sides of the notch 203 are depressed to allow the pivot sections 202 to be fit into the pivot holes 1221 of the pivot seats 122. In this way, the front storage box lid 20 is rotatable about the pivot holes 1221 of the pivot seats 122 to open or close the front storage box lid 20.

The conventional front storage box lid 20 forms a notch 203 in the rotation arm 201 to facilitate rotatably fitting the front storage box lid 20 to the pivot seats 122. However, the notch 203 lowers the structural strength of the rotation arm 201, making the rotation arm 201 easily damaged in the use of the front storage box lid 20 due to insufficient strength and making it often necessary to replace the whole front storage box lid 20. Further, in mounting the front storage box lid 20, if the force applied to depress the notch 203 is insufficient, it may make it impossible to proceed with the mounting operation.

Other prior art references are also know, such as JP 61017386U, which teaches a motorcycle having a motorcycle with a front storage box according to the preamble of Clam 1. In brief, the front storage box has an opening closable by a lid. The lid has a rotation arm carrying a pivot. Pivot holes are formed in a fixed component of the motorcycle to rotatably receive the pivot of the lid so as to allow the lid to rotatable with respect to the fixed component for selectively closing the opening. A constraint member is attached to the fixed component to hold the pivot in the pivot holes. It is however noted that the fixed component of the motorcycle to which the lid is rotatably mounted is a one-piece component and the pivot that is placed in to the pivot holes of the fixed component cannot be held in position before the constraint member is secured. This is troublesome in assembling the lid.

In view of the above discussed problems of the convention motorcycle front storage box, it is a challenge of the motorcycle industry to provide a front storage box lid that is easy to assemble and provides sufficient structural strength.

### SUMMARY OF THE INVENTION

The technical solution adopted in the present invention is a motorcycle having a front storage box lid of. The motorcycle comprises a steering handgrip below which a front shade board and a rear shade board assembly are mounted. The rear shade board assembly comprises an upper rear shade board and a lower rear shade board. The upper rear shade board forms a front storage box. The lower rear shade board comprises a barrier wall extending therefrom. An open slot is formed below the front storage box to receive a pivot section of a rotation arm of the front storage box lid to extend therethrough. The upper rear shade board comprises a pivot seat, a carrier seat, and a base seat, which are formed below the open slot. The barrier wall of the lower rear shade board comprises a constraint mechanism attached thereto. The upper rear shade board has a lower edge forming a hook, and the lower rear shade board comprises a barrier wall, which forms a mounting hole. Through fitting the pivot pin formed at one end of the pivot section of the rotation arm into the pivot hole of the pivot seat and positioning the pivot section in the carrier seat and the base seat and fitting the hook of the upper rear shade board through the mounting hole of the lower rear shade board, the lower rear shade board is coupled to the upper rear shade board and the constraint mechanism of the lower rear shade board securing the carrier seat and the base seat in position to allow the rotation arm of the front storage box lid to be rotatable about the pivot section for opening and/or closing. With such an arrangement, the rotation arm does not need to be damaged and the assembling operation is made easy. Preferred embodiments of the motorcycle having a front storage box are defined in the dependent claims 2-8.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a perspective view showing a portion of a conventional motorcycle.
FIG 2 is an exploded view showing a conventional front storage box lid and a conventional rear shade board.
FIG 3 is a perspective view showing the conventional front storage box lid and the conventional rear shade board assembled together.
FIG 4 is a side elevational view showing a motorcycle according to the present invention.
FIG 5 is a perspective view showing a rear shade board assembly according to the present invention.
FIG 6 is an exploded view showing a front storage box lid and upper and lower rear shade boards according to the present invention.

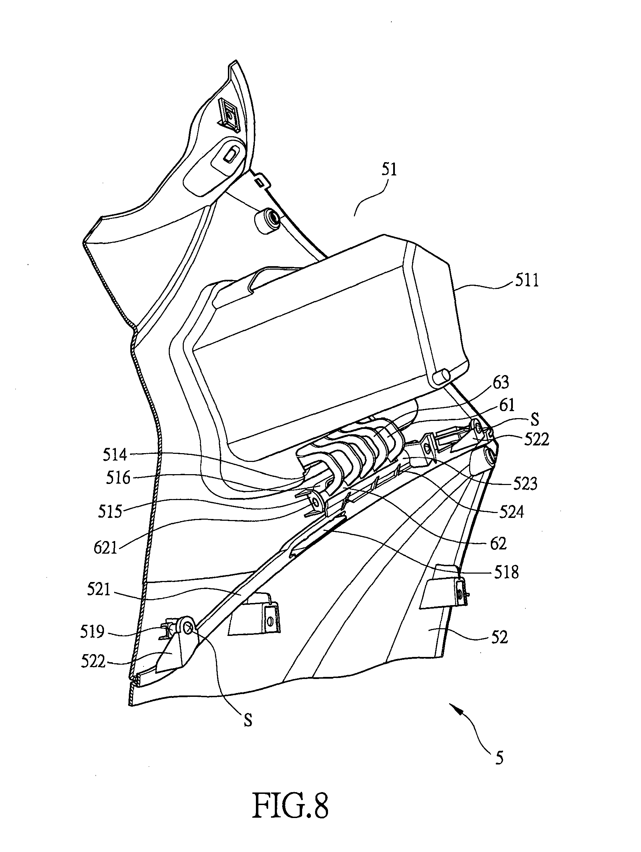

FIGS. 7 and 8 are perspective views illustrating assembling of the front storage box lid and the upper and lower rear shade boards according to the present invention.

### DETAILED DESCRIPTION OF THE PREFERRED EMBODIMENTS

The following descriptions are exemplary embodiments only, and are not intended to limit the scope, applicability or configuration of the invention in any way Rather, the following description provides a convenient illustration for implementing exemplary embodiments of the invention. Various changes to the described embodiments may be made in the function and arrangement of the elements described without departing from the scope of the invention as set forth in the appended claims.

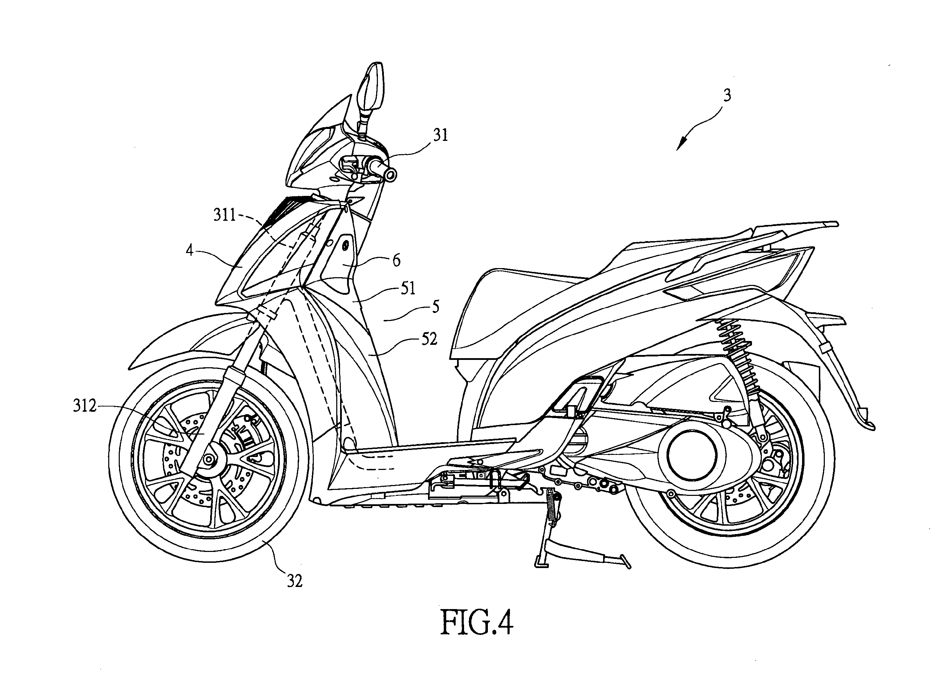

Referring to FIG 4, a motorcycle 3 according to the present invention comprises a steering handgrip 31 rotatably mounted to a front end thereof. The steering handgrip 31 has a lower end rotatably coupled to a head tube 311, and the head tube 311 has a lower end rotatably coupled to a front shock absorber 312. The front shock absorber 312 is coupled to a front wheel 32. The head tube 311 is covered by a front shade board 4 and a rear shade board assembly 5 of a frame cover.

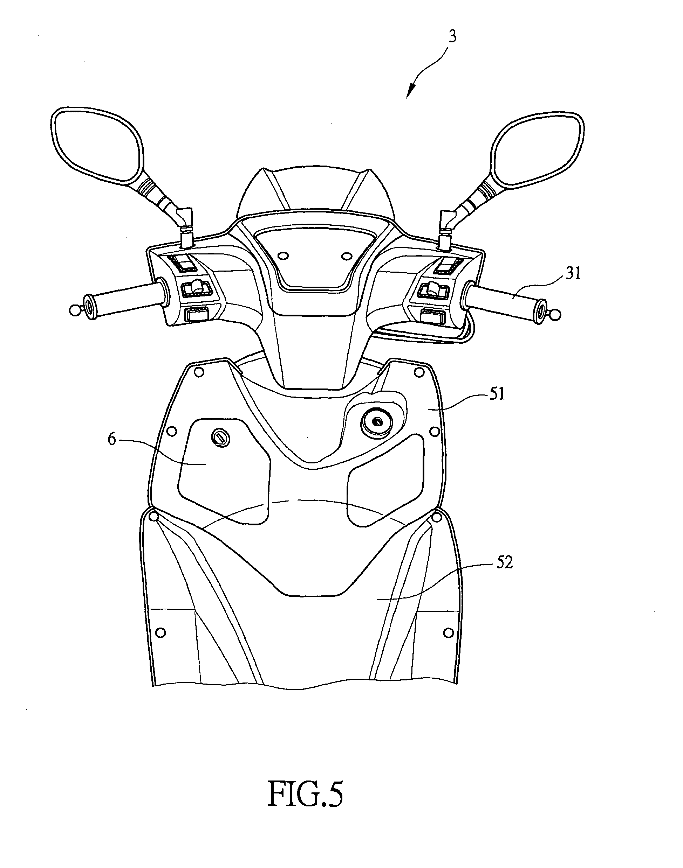

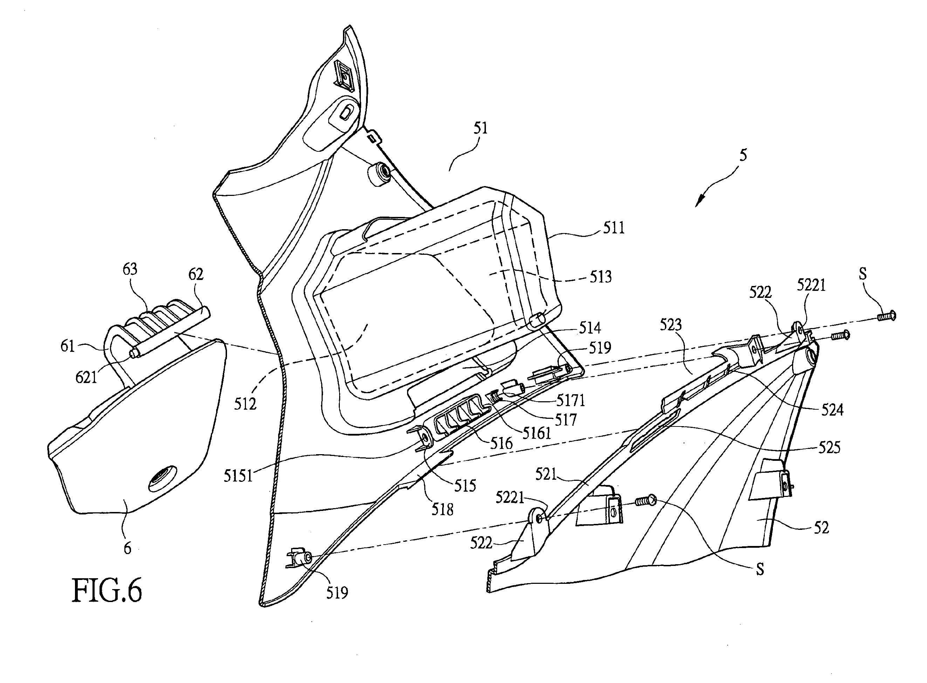

Also referring to FIGS. 5 and 6, the rear shade board assembly 5 comprises an upper rear shade board 51 and a lower rear shade board 52. The upper rear shade board 51 has a left side portion forming a front storage box 511. The front storage box 511 has an opening 512 and a storage chamber 513. The opening 512 is closable by a front storage box lid 6 for closing the front storage box 511. Formed in the upper rear shade board 51 below the opening 512 is an open slot 514, below which a pivot seat 515, a carrier seat 516, and a base seat 517 are provided. The pivot seat 515 forms a pivot hole 5151. The carrier seat 516 is located between the pivot seat 515 and the base seat 517. The carrier seat 516 forms a recess 5161. The base seat 517 forms a notch 5171. The pivot hole 5151, the recess 5161, and the notch 5171 are all located in a common center line. Further, the upper rear shade board 51 has a lower edge forming a hook 518 and a plurality of retention posts 519.

The lower rear shade board 52 forms a barrier wall 521 that extends in a left side of the lower rear shade board 52. The barrier wall 521 is arranged to correspond to the left side portion of the lower edge of the upper rear shade board 51. The barrier wall 521 of the lower rear shade board 52 forms a plurality of coupling seats 522 respectively corresponding to the retention posts 519. Each of the coupling seats 522 forms a coupling hole 5221, and the coupling hole 5221 receives a threaded fastener S to extend therethrough for engaging and being fixed to the respective retention post 519. Further provided on the barrier wall 521 is a constraint mechanism 523, which comprises an arc stop plate and corresponds to the carrier seat 516 and the base seat 517. A plurality of the reinforcement ribs 524 is arranged between the constraint mechanism 523 and the barrier wall 521 of the lower rear shade board 52. The barrier wall 521 also forms a mounting hole 525, which correspond to the hook 518 of the upper rear shade board 51.

The front storage box lid 6 comprises a lid body. The front storage box lid 6 comprises a U-shaped rotation arm 61 extending therefrom. The rotation arm 61 has an end forming a pivot section 62. The pivot section 62 has an end forming a pivot pin 621. The rotation arm 61 forms on a main body portion thereof a plurality of the reinforcement ribs 63.

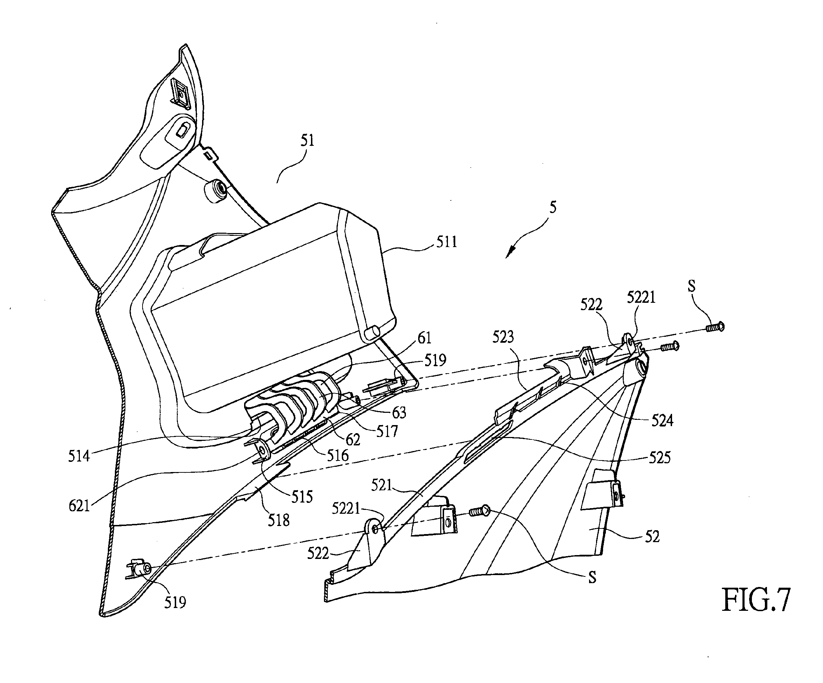

To practice the present invention, referring to FIGS. 6 and 7, the pivot section 62 of the rotation arm 61 of the front storage box lid 6 are put through the open slot 514 of the upper rear shade board 51 to have the pivot pin 621 of the pivot section 62 corresponding to and fit into the pivot hole 5151 of the pivot seat 515. The pivot section 62 is then positioned in the recess 5161 and the notch 5171 of the carrier seat 516 and the base seat 517. Afterwards, the mounting hole 525 of the lower rear shade board 52 is fit over the hook 518 of the upper rear shade board 51 to temporarily hold the lower rear shade board 52 below the upper rear shade board 51. At this moment, the constraint mechanism 523 may properly secure the pivot section 62 of the rotation arm 61 in position. Finally, the threaded fasteners S are put through the coupling holes 5221 of the coupling seats 522 of the lower rear shade board 52 and are tightened to the retention posts 519 of the upper rear shade board 51 to complete the assembling of the present invention.

The efficacy of the present invention is that with the arrangement of a pivot seat 515 and partially-open carrier seat 516 and base seat 517 below the open slot 514 that is formed in the left side portion of the upper rear shade board 51, there is no need to damage the structure of the rotation arm 61 of the front storage box lid 6 in fitting the pivot section 62 of the rotation arm 61 to the upper rear shade board 51. Further, the barrier wall 521 on the left side portion of the lower rear shade board 52 comprises a constraint mechanism 523 extending therefrom and corresponding to the carrier seat 516 and the base seat 517, so that when the upper and lower rear shade boards 51, 52 are coupled to each other, the constraint mechanism 523 may secure the carrier seat 516 and the base seat 517 in position to allow the rotation arm 61 of the front storage box lid 6 to rotate about the pivot section 62 for opening and/or closing. With such an arrangement, the front storage box lid 6 can be properly assembled at the same time when the upper and lower rear shade boards 51, 52 are mounted together, whereby convenience of assembling can be realized. Further, the rotation arm 61 of the front storage box lid 6 is provided with a plurality of reinforcement ribs 63, and an additional plurality of reinforcement ribs 524 is arranged between the barrier wall 521 of the lower rear shade board 52 and the constraint mechanism 523. This effectively improves the structural strengths of the rotation arm 61 and the constraint mechanism 523.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the scope of the present invention as defined in the appended claims.

## Claims

1. A motorcycle (3) having a front storage box lid (6), the motorcycle (3) comprising a steering handgrip (31) below which a front shade board (4) and a rear shade board assembly (5) are mounted, the rear shade board assembly (5) comprising an upper rear shade board (51) and a lower rear shade board (52), the upper rear shade board (51) forming a front storage box (511), which has an opening (512), which is provided with a front storage box lid (6), the front storage box lid (6) comprising a rotation arm (61), which comprises a pivot section (62), an open slot (514) being formed in the upper rear shade board (51) below the opening (512) to receive the rotation arm (61) of the front storage box lid (6) and the pivot section (62) thereof to extend therethrough, wherein a pivot seat (515) and a base seat (517) are provided on the upper rear shade board (51) below the open slot (514) and the lower rear shade board (52) comprises a constraint mechanism (523), the pivot section (62) having a pivot pin (621) that is fit into the pivot seat (515) to allow the pivot section (62) to be positioned in the base seat (517), **characterized in that** the upper rear shade board (51) has a lower edge forming a hook (518), the lower rear shade board (52) comprising a barrier wall (521), which forms a mounting hole (525), whereby when the lower rear shade board (52) and the upper rear shade board (51) are coupled to each other with the hook (518) being received in and retained by the mounting hole (525), then the constraint mechanism (523) of the lower rear shade board (52) secures the pivot section (62) in position.

2. The motorcycle (3) having a front storage box lid (6) according to claim 1, wherein a carrier seat (516) is arranged between the pivot seat (515) and the base seat (517).

3. The motorcycle (3) having a front storage box lid (6) according to claim 2, wherein the carrier seat (516) forms a recess (5161) and the base seat (517) forms a notch (5171).

4. The motorcycle (3) having a front storage box lid (6) according to claim 1, wherein the constraint mechanism (523) comprises an arc stop plate.

5. The motorcycle (3) having a front storage box lid (6) according to claim 1 or 4, wherein a plurality of the reinforcement ribs (524) is arranged between the constraint mechanism (523) and the lower rear shade board (52).

6. The motorcycle (3) having a front storage box lid (6) according to claim 1, wherein the rotation arm (61) comprises a plurality of reinforcement ribs (63).

7. The motorcycle (3) having a front storage box lid (6) according to claim 1 or 4, wherein the upper rear shade board (51) comprises a plurality of retention posts (519) and the lower rear shade board (52) forms a plurality of coupling seats (522) corresponding to the retention posts (519).

8. The motorcycle (3) having a front storage box lid (6) according to claim 1, wherein the front storage box (511) is arranged in a left side portion of the upper rear shade board (51).

## Patentansprüche

1. Motorrad (3) mit einer Deckelstruktur eines vorderen Aufbewahrungskastens (6), wobei das Motorrad (3) ein Steuer (31) aufweist, unter dem eine vordere Abdeckung (4) und eine hintere Abdeckungsgruppe (5) montiert sind, wobei die hintere Abdeckungsgruppe (5) eine obere hintere Abdeckung (51) und eine untere hintere Abdeckung (52) aufweist, wobei die obere hintere Abdeckung (51) einen vorderen Aufbewahrungskasten (511) bildet, der eine Öffnung (512) hat, die eine Deckelstruktur eines vorderen Aufbewahrungskastens (6) aufweist, wobei die Deckelstruktur eines vorderen Aufbewahrungskastens (6) einen Rotationsarm (61) aufweist, der einen Zapfenabschnitt (62) umfasst, wobei ein offener Schlitz (514) in der oberen hinteren Abdeckung (51) unterhalb der Öffnung (512) gebildet ist, um den Rotationsarm (61) der Deckelstruktur (6) aufzunehmen, und damit dessen Zapfenabschnitt (62) dadurch verlaufen kann,
wobei eine Zapfenaufilahme (515) und eine Basisaufnahme (517) auf der oberen hinteren Abdeckung (51) unterhalb des offenen Schlitzes (514) vorgesehen sind, und die untere hintere Abdeckung (52) ein Beanspruchungssystem (523) umfasst, wobei der Zapfenabschnitt (62) einen Drehzapfen (621) aufweist, der in die Zapfenaufnahme (515) eingepasst wird, damit der Zapfenabschnitt (62) in der Basisaufnahme (517) sein kann, **gekennzeichnet dadurch**, dass
die obere hintere Abdeckung (51) eine Unterkante hat, die einen Haken bildet (518), wobei die untere hintere Abdeckung (52) eine Barrierewand (521) umfasst, die ein Montageloch (525) bildet, so dass, wenn die untere hintere Abdeckung (52) und die obere hintere Abdeckung (51) miteinander verbunden sind und der Haken (518) in dem Montageloch (525) aufgenommen ist und davon festgehalten wird, das Beanspruchungssystem (523) der unteren hinteren Abdeckung (52) den Zapfenabschnitt (62) in Position hält.

2. Motorrad (3) mit einer Deckelstruktur eines vorderen Aufbewahrungskastens (6) nach Anspruch 1, wobei ein Tragesitz (516) zwischen der Zapfenaufnahme (515) und der Basisaufnahme (517) angebracht ist.

3. Motorrad (3) mit einer Deckelstruktur eines vorderen Aufbewahrungskastens (6) nach Anspruch 2, wobei der Tragesitz (516) eine Vertiefung (5161) bildet und die Basisaufnahme (517) eine Kerbe (5171) bildet.

4. Motorrad (3) mit einer Deckelstruktur eines vorderen Aufbewahrungskastens (6) nach Anspruch 1, wobei das Beanspruchungssystem (523) eine Bogen-Anschlagplatte umfasst.

5. Motorrad (3) mit einer Deckelstruktur eines vorderen Aufbewahrungskastens (6) nach Anspruch 1 oder 4, wobei eine Vielzahl von Verstärkungsrippen (524) zwischen dem Beanspruchungssystem (523) und der unteren hinteren Abdeckung (52) angebracht ist.

6. Motorrad (3) mit einer Deckelstruktur eines vorderen Aufbewahrungskastens (6) nach Anspruch 1, wobei der Rotationsarm (61) eine Vielzahl von Verstärkungsrippen (63) umfasst.

7. Motorrad (3) mit einer Deckelstruktur eines vorderen Aufbewahrungskastens (6) nach Anspruch 1 oder 4, wobei die obere hintere Abdeckung (51) eine Vielzahl von Haltepfosten (519) umfasst und die untere hintere Abdeckung (52) eine Vielzahl von Verbindungsaufnahmen (522) entsprechend den Haltepfosten (519).

8. Motorrad (3) mit einer Deckelstruktur eines vorderen Aufbewahrungskastens (6) nach Anspruch 1, wobei der vordere Aufbewahrungskasten (511) in einem linken Seitenteil der oberen hinteren Abdeckung (51) angebracht ist.

## Revendications

1. Motocyclette (3) avec structure de couvercle pour boîte de stockage avant (6), la motocyclette (3) comprenant un volant (31) au-dessous duquel une couverture antérieure (4) et un ensemble de couverture postérieure (5) sont montés, l'ensemble de couverture postérieure (5) comprenant une couverture postérieure supérieure (51) et une couverture postérieure inférieure (52), la couverture postérieure supérieure (51) formant une boîte de stockage antérieure (511), qui a une ouverture (512) pourvue d'une structure de couvercle pour boîte de stockage avant (6), la structure de couvercle pour boîte de stockage avant (6) comprenant un bras de rotation (61) qui comprend une section de pivot (62), une fente ouverte (514) étant formée dans la couverture postérieure supérieure (51) au-dessous de l'ouverture (512), pour recevoir le bras de rotation (61) de la structure de couvercle pour boîte de stockage avant (6), et la section de pivot (62) de celui-ci pour s'étendre à travers,
où un logement de pivot (515) et un logement de base (517) sont prévus sur la couverture postérieure supérieure (51) au-dessous de la fente ouverte (514), et la couverture postérieure inférieure (52) comprend un mécanisme de contrainte (523), la section de pivot (62) ayant un pivot de direction (621) qui est emboîté dans le logement de pivot (515) pour permettre à la section de pivot (62) d'être positionnée dans le logement de base (517), **caractérisée en ce que**
la couverture postérieure supérieure (51) a un bord inférieur qui forme un crochet (518), la couverture postérieure inférieure (52) comprenant une paroi de barrière (521) qui forme une forure de montage (525), de manière que quand la couverture postérieure inférieure (52) et la couverture postérieure supérieure (51) sont accouplées l'une à l'autre et le crochet (518) est reçu dans la forure de montage (525) et retenu par celle-ci, alors le mécanisme de contrainte (523) de la couverture postérieure inférieure (52) maintient la section de pivot (62) en place.

2. Motocyclette (3) avec structure de couvercle pour boîte de stockage avant (6) selon la revendication 1, où un logement de support (516) est disposé entre le logement de pivot (515) et le logement de base (517).

3. Motocyclette (3) avec structure de couvercle pour boîte de stockage avant (6) selon la revendication 2, où le logement de support (516) forme un enfoncement (5161), et le logement de base (517) forme une encoche (5171).

4. Motocyclette (3) avec structure de couvercle pour boîte de stockage avant (6) selon la revendication 1, où le mécanisme de contrainte (523) comprend une plaque d'arrêt à arc.

5. Motocyclette (3) avec structure de couvercle pour boîte de stockage avant (6) selon la revendication 1 ou 4, où une pluralité de nervures de renforcement (524) est disposée entre le mécanisme de contrainte (523) et la couverture postérieure inférieure (52).

6. Motocyclette (3) avec structure de couvercle pour boîte de stockage avant (6) selon la revendication 1, où le bras de rotation (61) comprend une pluralité de nervures de renforcement (63).

7. Motocyclette (3) avec structure de couvercle pour boîte de stockage avant (6) selon la revendication 1 ou 4, où la couverture postérieure supérieure (51) comprend une pluralité de poteaux de rétention (519) et la couverture postérieure inférieure (52) forme une pluralité de logements d'accouplement (522) qui correspondent aux poteaux de rétention (519).

8. Motocyclette (3) avec structure de couvercle pour boîte de stockage avant (6) selon la revendication 1, où la boîte de stockage antérieure (511) est disposée dans une partie du côté gauche de la couverture postérieure supérieure (51).
